# EUROPÄISCHE PATENTANMELDUNG

(11) **EP 1 186 451 A2**
(43) Veröffentlichungstag der Anmeldung: **13.03.2002**
(21) Anmeldenummer: 01119104.6
(22) Anmeldetag: 08.08.2001
(51) Int. Cl.: B60C 23/00

(54) **Vorrichtung zum Befüllen oder Entlüften des Reifens eines Fahrzeuges, inbesondere eines Traktors**

(30) Priorität: 12.09.2000 DE 10044885
(71) Anmelder: GKN Walterscheid GmbH, 53797 Lohmar (DE)
(72) Erfinder: Nienhaus, Clemens, Dipl.-Ing., 53819 Neunkirchen-Seelscheid (DE)
(74) Vertreter: Harwardt, Günther, Dipl.-Ing.

(57) **Zusammenfassung**

Die Erfindung betrifft eine Vorrichtung zum Befüllen oder Entlüften eines Reifens eines Fahrzeuges, insbesondere eines Traktors. Sie ist der Felge eines Rades zugeordnet. Ferner umfaßt die Vorrichtung ein Gehäuse 14, welches einen zweiten Leitungsanschluß 11 aufweist, der zur leitungsmäßigen Verbindung mit dem ersten Anschluß 10 dient. Im Gehäuse 14 ist ein Innenteil 21 gelagert, so daß beide relativ zueinander drehbar sind. Das Innenteil weist einen dritten Leitungsanschluß 29 auf, der zur Verbindung mit einer zur Druckversorgung führenden Leitung 31, 32 dient. Ferner ist ein steuerbares Ventil 9 vorgesehen, daß dem zweiten Leitungsanschluß zugeordnet ist. Zwischen dem Gehäuse 14 und dem Innenteil 21 sind zwei die Ringkammer 25 seitlich abschließende Dichtungen 26 vorhanden, die beispielsweise dem Innenteil 21 zugeordnet sind und durch Druckbeaufschlagung der Ringkammer 25 an jeweils eine mit dem Gehäuse 14 verbundenen Gegenfläche 27, 28 dichtend in Anlage bringbar sind.

## Beschreibung

Die Erfindung betrifft eine Vorrichtung zum Befüllen oder Entlüften eines zu einem Rad eines Fahrzeuges, insbesondere Traktors gehörenden, mit Luft befüllbaren Reifens.

Bei Traktoren ist eine Veränderung des Luftdrucks im Reifen besonders von Bedeutung, da bei der Arbeit auf dem Feld mit einem niedrigeren Reifendruck eine geringere Bodenverdichtung und darüber hinaus eine höhere Traktion erzielbar sind. Bei für Traktoren hohen Geschwindigkeiten, z.B. 40 km/h, mit niedrigem Luftdruck ist jedoch eine Fahrstabilität nicht gewährleistet. Der Fachzeitschrift profi-magazin für agrartechnik, 10/1995 "Der Luftdruck im Reifen: Kleine Ursache, große Wirkung" sind verschiedene Regelanlagen zu entnehmen. Danach sind die Drehübertrager entweder je nach Achstyp an der Innen- oder Außenseite des Rades dem Radflansch zugeordnet. Bei preiswerteren Systemen erfolgt die Luftzuführung außen am Reifen vorbei bis zur Drehdurchführung. Bei der Anordnung als Zwischenflansch zwischen dem Rad und dem Radflansch erfolgt die Befestigung der Drehdurchführung über die Radschrauben. Diese Ausführung hat den Vorteil, daß keine außen freiliegenden Leitungen vorhanden sind. Die jedoch ohnehin kritische Schraubverbindung wird durch die vergrößerte freie Biegelänge der Radschrauben noch höher belastet.

In der US 4 804 027 ist eine Vorrichtung zum Befüllen und Entlüften eines zu einem Rad eines Fahrzeugs gehörenden und mit Luft befüllbaren Reifens beschrieben, die in die Radnabe die den Radflansch trägt, integriert ist. Die Radnabe bildet das Außenteil mit einem Kanal, an welchen eine Verbindungsleitung anschließbar ist, die zum Reifen führt. In der Nabe ist ein Innenteil gelagert, welches ortsfest gehalten ist und mit einem Anschluß zu einer Druckversorgung versehen ist. Zwei dem Innenteil fest zugeordnete und zueinander beabstandete Dichtungen schließen zusammen mit einer Ventilanordnung eine Ringkammer ab. Es handelt sich um ein federbelastetes Ventil, das bei Überschreiten eines bestimmten Druckes in der Kammer geöffnet wird und die Luft in den Kanal der Radnabe strömen lässt. Das Ventil ist jedoch so ausgebildet, daß es erst öffnet, wenn die Dichtungen sich gegen die entsprechende radial außen liegende Bohrungsfläche der Radnabe angelegt haben. Die Dichtungen werden stets mit dem vollen Druck, der zum Füllen des Reifens anliegt, gegen die entsprechende Gegenfläche der Radnabe angepresst. Bei hohen Relativgeschwindigkeiten ist dies von Nachteil, da der hohe Druck zu einer starken Reibung und damit auch zu einer entsprechend hohen Abnutzung der Dichtungen führt. Ein weiterer Nachteil besteht darin, die Nabe und das Innenteil unabhängig voneinander an einem weiterem Bauteil gelagert sind, so daß radiale Abweichungen sich voll auf die Dichtungen auswirken.

Die DE OS 1 605 743 beschreibt eine Vorrichtung zum Regeln des Reifendruckes bei Kraftfahrzeugen. Sie beschreibt dazu hinaus eine Drehdurchführung mit einem Außenteil und einem Innenteil, welche relativ zueinander drehbar und mit Berührungsdichtungen zueinander abgedichtet sind, und ständig einer Relativbewegung unterliegen.

Eine Reifenfüllanlage ist beispielsweise auch in der DE-OS 1 907 082 beschrieben. Aus dieser ist auch bereits herleitbar, daß es für Fahrzeuge mit relativ hohen Umfangsgeschwindigkeiten notwendig ist, die Drehdurchführung während des Normalbetriebes, d.h. während der Nichtbetätigung der Reifenfüllanlage so zu schalten, daß kein Druck ansteht, da erkannt wurde, daß Probleme an den Dichtelementen der Drehverbindung auftreten. Diese Problematik wird besonders deutlich, wenn große Durchmesser vorhanden sind, wie das beispielsweise bei Traktoren der Fall ist.

Der Erfindung liegt daher die Aufgabe zugrunde, eine Vorrichtung zum Befüllen oder Entlüften eines zu einem Rad eines Fahrzeuges, insbesondere Traktors, gehörenden, mit Luft befüllbaren Reifens bereitzustellen, die, obwohl die Zuordnung zur Felge erfolgt, über eine lange Laufdauer eine sichere Abdichtung gewährleistet.

Gelöst wird diese Aufgabe erfindungsgemäß durch eine Vorrichtung zum Befüllen oder Entlüften eines zu einem Rad eines Fahrzeuges, insbesondere Traktors gehörenden, mit Luft befüllbaren Reifens, mit einem ersten Leitungsanschluß in der Felge des Rades gelöst, umfassend
- ein Gehäuse,
   welches einen zweiten Leitungsanschluß aufweist, der zur leitungsgemäßigen Verbindung mit dem ersten Anschluß am Rad dient, und welches eine Bohrung aufweist,
- ein Innenteil,
   daß im Gehäuse gelagert ist, so daß beide relativ zueinander drehbar sind,
   das einen dritten Leitungsanschluß aufweist, der zur Verbindung mit einer zu einer Druckversorgung führenden Leitung dient, und
- ein steuerbares Ventil,
   das dem zweiten Leitungsanschluß zugeordnet ist,
wobei zwischen dem Gehäuse und dem Innenteil, eine Ringkammer ausgebildet ist, welche mit dem zweiten Leitungsanschluß und dem dritten Leitungsanschluß verbunden ist und zwischen dem Gehäuse und dem Innenteil zwei die Ringkammer seitlich abschließende Dichtungen angebracht sind, welche an einem der beiden Bauteile, nämlich dem Gehäuse oder dem Innenteil, festgelegt sind und durch Druckbeaufschlagung der Ringkammer an eine mit dem anderen Bauteil verbundene Gegenfläche dicht in Anlage bringbar sind, und wobei die Dichtungen rotationssymmetrisch zu einer Längsachse ausgebildet ist und einen ringförmigen Befestigungsabschnitt mit einem ersten Außendurchmesser aufweisen, von dem ausgehend sich ein erster Wandabschnitt erstreckt, der von der Längsachse weg verläuft und an einem Scheitel der einen zweiten Durchmesser aufweist, in einen zweiten, zum ersten Wandabschnitt und dem Befestigungsabschnitt axial beabstandeten zweiten Wandabschnitt übergehen, der auf die Längsachse zu verläuft und in einer axial vorstehenden Dichtlippe, die auf einem dritten Durchmesser angeordnet ist, endet, welche zur Anlage an der Gegenfläche bestimmt ist, wobei die Beziehung gilt, daß eine Ringfläche zwischen dem ersten Durchmesser und dem zweiten Durchmesser größer ist, als die Ringfläche zwischen dem zweiten Durchmesser und dem dritten Durchmesser, und wobei ferner die Dichtung axial federnd ausgebildet ist.

Von Vorteil bei dieser Ausbildung ist, daß die Dichtungen nur dann und soweit dichtend an einer Gegenfläche anliegen, wenn ein Druck ansteht, so daß für die übrigen Betriebszeiten, in denen keine Befüllung erfolgt, die Reibung zwischen den Dichtungen und den entsprechenden Gegenflächen praktisch auf Null herabgesetzt wird. Hierdurch wird der Verschleiß so verringert, daß eine hohe Lebensdauer erzielbar ist, obwohl für die Dichtungen große Durchmesser vorgesehen sind, da die Zuordnung zum Rad erfolgt.

Von Vorteil bei dieser Ausbildung ist vor allem, daß selbst bei großen Durchmessern nur geringe Zeitanteile gegeben sind in denen eine Berührung, die einen Verschleiß erzeugen würde, gegeben ist. Es wird somit eine Vorrichtung erzielt, die eine lange Lebensdauer aufweist. Ferner ist von Vorteil, daß die Dichtungen nur mit der Druckkraft beaufschlagt an der Gegenfläche anliegen, die sich aus der Differenz der beiden Ringflächen ergibt. Hierdurch ist die Reibung wesentlich vermindert. Ein Füllen der Reifen kann somit auch während der Fahrt erfolgen. Die axiale Anlage der Dichtung an den Gegenflächen führt zu dem Vorteil, das radiales Spiel zwischen dem Gehäuse und dem Innenteil sich nicht auf die Funktion der Dichtungen auswirkt.

Bevorzugt sind die Dichtungen mit dem Innenteil verbunden und die zugehörigen Gegenflächen dem Gehäuse zugeordnet. Eine der beiden Gegenflächen kann auch beispielsweise zu einem Bauteil gehören, das mit dem Gehäuse dicht verbunden ist, beispielsweise einem Deckel.

Vorzugsweise ist die Anordnung so getroffen, daß die Dichtung mit ihrer Dichtlippe im unbeaufschlagten Zustand die Gegenfläche vorspannungsfrei berührt oder aber mit einem geringen Spalt zu dieser gehalten ist.

Ferner ist vorgesehen, daß die Ringkammer über ein Ventil mit der freien Atmosphäre verbindbar ist.

Ein bevorzugtes Ausführungsbeispiel der Erfindung ist in der Zeichnung schematisch dargestellt.

Es zeigt
- Figur 1: ein Rad, teilweise geschnitten dargestellt, in Zuordnung zu dem Radflansch einer aus dem Achsrohr eines Traktors austretenden Achswelle,
- Figur 2: einen Teil der Vorrichtung zum Befüllen oder Entlüften des Reifens im Längsschnitt, im vergrößerten Maßstab dargestellt,
- Figur 3: eine Seitenansicht zu Figur 2 und
- Figur 4: ein Detail bezüglich der Ausbildung der Dichtung der vom Druck wirksam beaufschlagten Flächen der Dichtung.

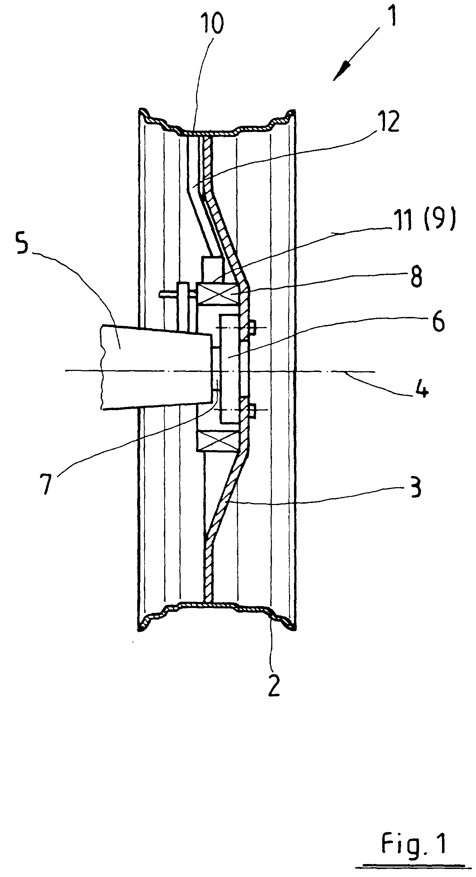

In Figur 1 ist das Rad 1 ohne Reifen dargestellt. Das Rad 1 besteht aus der Felge 2, welche zur Aufnahme eines Reifens dient und dem Radkörper 3, der um die Drehachse 4 an dem Radflansch 6, der aus dem Achsrohr 5 austretenden Achswelle 7 durch Schrauben befestigt ist. Das Rad 1 wird über die Achswelle 7 und den Radflansch 6 drehend um die Drehachse 4 angetrieben. Vom Traktor ist nur das Achsrohr 5 dargestellt. Koaxial um den Radflansch 6 ist am Radkörper 3 eine Drehdurchführung angeordnet, welche eine Vorrichtung zum Befüllen oder Entlüften des Reifens darstellt. Zur Vorrichtung zum Befüllen oder Entlüften gehören ein erster Leitungsanschluß 10 an der Felge 2, ein zweiter Leitungsanschluß 11 am Gehäuse der Vorrichtung 8 zum Befüllen oder Entlüften, ein damit verbundenes Ventil 9 und eine Leitung 12, welche den ersten Leitungsanschluß 10 mit dem zweiten Leitungsanschluß 11 verbindet. Das Ventil 9 ersetzt gleichzeitig auch das üblicherweise dem Reifen bzw. der Felge zugeordnete Luftventil. Die Luft wird der Vorrichtung 8 von einer zentralen Druckluftversorgung über nicht näher dargestellte Mittel zugeführt.

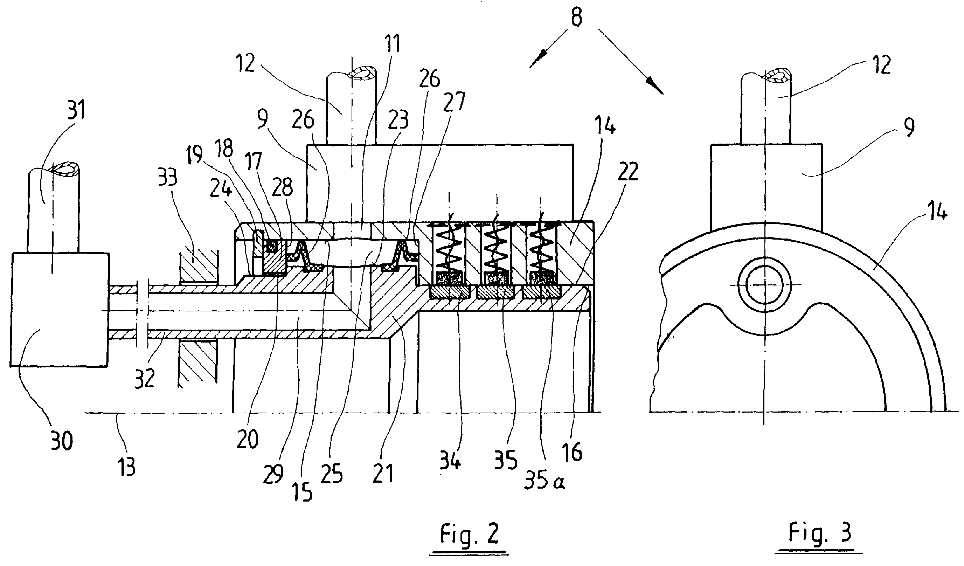

Aus den Figuren 2 und 3 ist die Vorrichtung 8 zum Befüllen oder Entlüften eines Reifens näher ersichtlich. Die Längsachse der Vorrichtung 8 zum Befüllen oder Entlüften eines Reifens ist mit 13 bezeichnet. Die Vorrichtung 8 wird am Radkörper 3 so montiert, daß die Längsachse 13 mit der Drehachse 4 zusammenfällt.

Die Vorrichtung 8 umfaßt ein Gehäuse 14, das ringförmig gestaltet ist und eine Bohrung 15 aufweist. Rechts neben der Bohrung 15 ist die dazu im Durchmesser reduzierte erste Lagerbohrung 16 erkennbar. Nach links ist die Bohrung 15 durch den Deckel 17 abgeschlossen, der von einem Sicherungsring 19 gehalten wird. Der Deckel 17 ist zur Bohrung 15 hin durch die Dichtung 18 abgedichtet. Ferner weist der Deckel 17 die zweite Lagerbohrung 20 auf, die ebenfalls im Verhältnis zur Lagerbohrung 15 im Durchmesser reduziert ist. In dem Gehäuse 14 ist relativ dazu das Innenteil 21 drehbar gelagert. Das Innenteil 21 weist eine erste Stufenfläche 22 auf, die in der ersten Lagerbohrung 16 drehbar aufgenommen ist. Die zweite Stufenfläche 23 ist im Durchmesser größer bemessen als die erste Stufenfläche 22 und auch größer bemessen als die dritte Stufenfläche 24, mit der das zweite Innenteil 21 in der Lagerbohrung 20 aufgenommen ist. Die Ringkammer 25 wird durch eine die Bohrung 15 nach rechts hin abschließende erste Gegenfläche 27 für eine Dichtung 26 und die zum Deckel 17 gehörende zweite Gegenfläche 28, gegen welche eine weitere Dichtung 26 zur Anlage kommt, und durch die zweite Stufenfläche 23 begrenzt. Die durch die zweite Stufenfläche 23 im Verhältnis zur ersten Stufenfläche 22 und dritten Stufenfläche 24 erzeugte Vergrößerung dient zur axialen Halterung des Innenteils 21 im Verhältnis zum Gehäuse 14. Das Innenteil 21 ist ferner mit einem dritten Leitungsanschluß 29 versehen, der dazu dient, daß mittels einer Steckkupplung eine leitungsmäßige Verbindung mit einem Hauptventil 30 erzielbar ist, welches mit einem Anschluß 31 zum Druckerzeuger (Kompressor) versehen ist.

Die Steckkupplung kann in dem Leitungsanschluß 29 des Innenteiles 21 vorgesehen sein, aber auch im Bereich des Hauptventils 30 oder zwischen beiden liegen. Für den Fall, daß die Steckkupplung dem Hauptventil 30 zugeordnet ist, ist eine Anschlußleitung 32 vorgesehen, welche bei Montage des Rades mit einem Halter 33, der beispielsweise am Achsrohr befestigt ist, in Eingriff gebracht wird, so daß das Innenteil 21 bei montiertem Rad stillsteht, während das Gehäuse 14 mit dem Radkörper rotiert. Im Gehäuse 14 ist ferner ein zweiter Leitungsanschluß 11 vorgesehen, der das Ventil 9 mit der Ringkammer 25 verbindet. An das Ventil 9 ist die Leitung 12 angeschlossen, die zu dem ersten Leitungsanschluß 10 im Bereich der Felge, wie in Figur 1 dargestellt, führt. Ferner sind zwischen dem Gehäuse 14 und dem Innenteil 21 Schleifringaufnehmer 34, 35, 35a vorgesehen, die Steuerleitungen bzw. eine Stromversorgungsleitung und gegebenenfalls eine Masseleitung zum Ventil 9 mit einer Außenbetätigung bzw. dem Hauptventil 30 verbinden. Sofern eine Verbindung zur Masse über die Flanschverbindung zum Achsrohr gewährleistet ist, kann beispielsweise der dritte Schleifringaufnehmer 35a entfallen.

Um bei Rotation des Rades 1 beispielsweise eine Druckerhöhung im Reifen auszuführen, wird das Hauptventil 30 mit Strom beaufschlagt und die durch die über den Anschluß 31 und das Hauptventil 30 kommende Druckluft über die Anschlußleitung 32 in den dritten Leitungsanschluß 29 und von dort in die Ringkammer 25 geleitet. Da diese über den zweiten Anschluß 11 mit dem Ventil 9 verbunden ist, kann die Luft durch das bei Überschreiten eines bestimmten Druckes öffnende Ventil 9, das als Rückschlagventil gestaltet ist, über die Leitung 12 zu dem ersten Leitungsanschluß 10 und in den Reifen geleitet werden. Ist der Solldruck erreicht, schließt das Hauptventil 30 und öffnet dabei die Verbindung zur Atmosphäre, so daß die Ringkammer 25 drucklos wird.

Ist der Druck im Reifen zu hoch und soll verringert werden, wird das Ventil 9 mit Strom beaufschlagt, so daß es geöffnet wird. Die Luft kann dann entweder vom Ventil 9 unmittelbar über einen Kanal nach außen gelangen oder aber über die Ringkammer 25 zum Hauptventil 30 und von dort über einen Luftanschluß nach außen in die Atmosphäre gelangen. Ist der gewünschte Druck erreicht, wird das Ventil 9 stromlos geschaltet und damit geschlossen. Der vorgegebene Druck wird im Reifen gehalten. Sowohl das Hauptventil 30 als auch das Ventil 9 sind im Normalfall stromlos. Bei Stromausfall besteht damit keine Gefahr, daß ein Druckverlust im Reifen eintreten kann. Es kann dann aber auch kein Füllvorgang eingeleitet werden, so daß auch kein Überdruck entstehen kann. Vorzugsweise kommen als Ventile 9, 30 elektromagnetisch betätigte Ventile in Frage, was eine einfache Programmierung ermöglicht. Die Anlage kann auch so ausgelegt werden, daß ein automatischer Füll- und Entleerungsvorgang gewählt wird. Damit ist ein hoher Komfort mit einer großen Sicherheit gegen Fehlbedienung gegeben. So können beispielsweise für verschiedene Geräte die Druckverhältnisse für Arbeiten auf dem Acker als auch für die Straßenfahrt in einer Steuereinheit hinterlegt werden. Die Vorrichtung kann dann einfach aktiviert werden und es wird dann der jeweils gerätespezifische Druck für Straßenfahrt oder Fahrt auf dem Acker erzeugt. Für den Fall, daß eine permanente Drucküberwachung gewünscht wird, kann dies durch ein dem Ventil 9 zugeordnetes elektrisches Manometer erfolgen. Hierzu ist dann ein zusätzlicher Schleifring erforderlich. Bei der Permanentüberwachung kann auch eine lastabhängige Regelung genutzt werden.

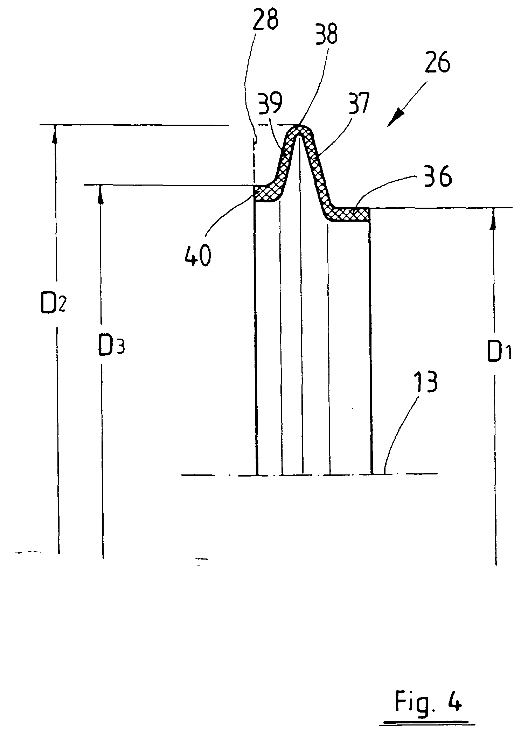

In Figur 4 ist ein Längsschnitt einer Dichtung 26 erkennbar, und zwar der Dichtung 26, die mit der Gegenfläche 28 des Deckels 17 zusammenwirkt. Die nachfolgende Beschreibung der Merkmale der Dichtung 26 gilt auch für die weitere Dichtung 26, die der Gegenfläche 27 des Gehäuses 14 zugeordnet ist.

Die Dichtung 26 umfaßt einen Befestigungsabschnitt 36, der im wesentlichen ringförmig ausgestaltet ist und wie insbesondere aus Figur 2 erkennbar ist, in dem Innenteil 21, d.h. in der zweiten Stufenfläche 23 versenkt angeordnet ist, so daß seine äußere Fläche mit der zweiten Stufenfläche 23 im wesentlichen abschließt. Der Durchmesser der Dichtung 26 im Bereich dieser Fläche ist mit D1 bezeichnet. Von diesem Befestigungsabschnitt 36 verläuft ein erster Wandabschnitt 37 nach außen, d.h. von der Längsachse 13 weg und zwar zunächst im wesentlichen radial oder geringfügig geneigt und dann mit einem Bogen, der sich über den Scheitel 38 fortsetzt und damit in den zweiten Wandabschnitt 39 übergeht. Der größte Durchmesser im Bereich des Scheitels 38 ist mit D2 bezeichnet. Im axialen Abstand zum ersten Wandabschnitt 37 verläuft der zweite Wandabschnitt 39 wieder in Richtung auf die Längsachse 13 zu und endet in einer Dichtlippe 40, deren Wirkdurchmesser mit D3 bezeichnet ist. Die Dichtlippe 40 ist im drucklosen Zustand der Vorrichtung mit einem geringen Spalt gegenüber der Gegenfläche 28 gehalten. Sie kann aber auch Vorspannungsfrei anliegen. Die Dichtung 26 ist axial flexibel. Die Ringfläche zwischen dem ersten Durchmesser D1 und dem zweiten Durchmesser D2 ist größer als die Ringfläche zwischen dem zweiten Durchmesser D2 und dem dritten Durchmesser D3, so daß bei Druckbeaufschlagung der Ringkammer 25 und damit der Dichtung 26 auf diese eine resultierende Kraft wirkt, die sie axial verformt und die Dichtlippe 40 zur Anlage an die Gegenfläche 28 beaufschlagt. Die Beaufschlagung ist zwar druckabhängig, entspricht jedoch wegen der Anordnung der Dichtlippe 40 auf einem geringeren Durchmesser nicht dem vollen Fülldruck.

In Figur 4 ist die Dichtung unbeaufschlagt dargestellt, so daß zwischen der Dichtlippe 40 und der Gegenfläche 28 ein geringer Spalt vorhanden ist. Es ist aber auch möglich, daß die Dichtlippe 40 im vom Druck unbeaufschlagten Zustand vorspannungsfrei noch an der Gegenfläche 28 anliegt. Bei Druckbeaufschlagung erfolgt dann die vollständige Berührung mit der Gegenfläche 28, so daß dann, wenn der Traktor beim Befüllen des Reifens oder Entlüften in Bewegung ist, d.h. die Räder sich drehen, der reibende Zustand zwischen der Dichtlippe 40 und der Gegenfläche 28 nur solange aufrecht erhalten ist, wie die Druckbeaufschlagung erfolgt. Danach hebt die Dichtlippe 40 wieder von der Gegenfläche 28 ab bzw. wird in einen Zustand überführt, bei dem sie lediglich diese vorspannungsfrei berührt, so daß praktisch kein Verschleiß eintreten kann.

Beide Ventile 9, 30 sind als Elektromagnetventile ausgeführt. Das Hauptventil 30 weist zwei Stellungen auf. In der ersten Stellung (Aus) ist das Hauptventil stromlos. Die Verbindung zum Druckerzeuger ist geschlossen. Die Verbindung zur Atmosphäre ist geöffnet. Die Ringkammer 25 ist drucklos. In der zweiten Stellung (Ein) ist das Ventil strombeaufschlagt. Die Verbindung zur freien Atmosphäre wird geschlossen und die Luftzufuhr, d.h. die Verbindung zum Druckerzeuger wird geöffnet, so daß die Ringkammer 25 mit Druck beaufschlagt wird. Die im drucklosen Zustand im wesentlichen berührungsfreien Dichtungen 26 werden aktiviert und die Luft passiert bei entsprechender Überschreitung des Druckes das Ventil 9. Ist der Solldruck erreicht, schließt das Hauptventil 30 und öffnet die Verbindung zur Atmosphäre. Dadurch wird die Ringkammer drucklos und das Ventil 9 wird automatisch in die geschlossene Position überführt. Zur Entlüftung wird das Ventil 9 mit Strom beaufschlagt. Es wird damit ein Bypass geöffnet. Die Luft geht durch die Ringkammer 25 zum Hauptventil 30 und entweicht durch die dort vorgesehene Verbindung in die freie Atmosphäre. Ist der Solldruck erreicht, wird das Ventil 9 stromlos geschaltet und damit geschlossen. Der vorgegebene Druck wird durch dieses Ventil gehalten. Von Vorteil bei diesem System ist, daß dadurch, daß die Zuordnung zum Rad erfolgt eine weitgehende Unabhängigkeit von der Bauart der Traktoren oder Fahrzeuge gegeben ist. Die kritische Schraubverbindung zwischen dem Rad und dem Flansch der Achswelle wird nicht beeinflußt. Es ist nur eine lose Verbindungsstelle zum Achsgehäuse oder Chassis vorgesehen, was eine große konstruktive Freiheit ergibt und einen modularen Aufbau mit vielen Gleichteilen ermöglicht. Es ist außerdem eine Eignung gleichermaßen für die Vorder- und die Hinterräder sowie für die Zuordnung zu Anhängern gegeben. Es sind keine losen Verbindungen oder Schläuche oder Ventile im kritischen Bereich des Radkörpers vorhanden. Wichtig ist aber vor allem, daß die Dichtungen nur während des Füllvorganges aktiviert sind.

### Bezugszeichenliste

- 1: Rad
- 2: Felge
- 3: Radkörper
- 4: Drehachse
- 5: Achsrohr
- 6: Radflansch
- 7: Achswelle
- 8: Vorrichtung zum Befüllen oder Entlüften
- 9: Ventil
- 10: erster Leitungsanschluß
- 11: zweiter Leitungsanschluß
- 12: Leitung
- 13: Längsachse
- 14: Gehäuse
- 15: Bohrung
- 16: erste Lagerbohrung
- 17: Deckel
- 18: Dichtung
- 19: Sicherungsring
- 20: zweite Lagerbohrung
- 21: Innenteil
- 22: erste Stufenfläche
- 23: zweite Stufenfläche
- 24: dritte Stufenfläche
- 25: Ringkammer
- 26: Dichtung
- 27: erste Gegenfläche
- 28: zweite Gegenfläche
- 29: dritter Leitungsanschluß
- 30: Hauptventil
- 31: Anschluß
- 32: Anschlußleitung
- 33: Halter
- 34: Schleifringaufnehmer
- 35: Schleifringaufnehmer
- 36: Befestigungsabschnitt
- 37: erster Wandabschnitt
- 38: Scheitel
- 39: zweiter Wandabschnitt
- 40: Dichtlippe

- D1: erster Durchmesser
- D2: zweiter Durchmesser
- D3: dritter Durchmesser

## Patentansprüche

1. Vorrichtung zum Befüllen oder Entlüften eines zu einem Rad (1) eines Fahrzeuges, insbesondere Traktors, gehörenden, mit Luft befüllbaren Reifens, mit einem ersten Leitungsanschluß (10) in der Felge (2) des Rades (1), umfassend
- ein Gehäuse (14),
welches einen zweiten Leitungsanschluß (11) aufweist, der zur leitungsgemäßigen Verbindung mit dem ersten Anschluß (10) am Rad (1) dient, und welches eine Bohrung (15) aufweist,
- ein Innenteil (21),
daß im Gehäuse (14) gelagert ist, so daß beide relativ zueinander drehbar sind,
das einen dritten Leitungsanschluß (29) aufweist, der zur Verbindung mit einer zu einer Druckversorgung führenden Leitung (31, 32) dient, und
- ein steuerbares Ventil (9),
das dem zweiten Leitungsanschluß (11) zugeordnet ist,
wobei zwischen dem Gehäuse (14) und dem Innenteil (21), eine Ringkammer (25) ausgebildet ist, welche mit dem zweiten Leitungsanschluß (11) und dem dritten Leitungsanschluß (29) verbunden ist und zwischen dem Gehäuse (14) und dem Innenteil (21) zwei die Ringkammer (25) seitlich abschließende Dichtungen (26) angebracht sind, welche an einem der beiden Bauteile, nämlich dem Gehäuse (14) oder dem Innenteil (21), festgelegt sind und durch Druckbeaufschlagung der Ringkammer (25) an eine mit dem anderen Bauteil verbundene Gegenfläche (27, 28) dicht in Anlage bringbar sind und wobei die Dichtungen (26) rotationssymmetrisch zu einer Längsachse (13) ausgebildet ist und einen ringförmigen Befestigungsabschnitt (36) mit einem ersten Außendurchmesser (D1) aufweisen, von dem ausgehend sich ein erster Wandabschnitt (37) erstreckt, der von der Längsachse (13) weg verläuft und an einem Scheitel (38), der einen zweiten Durchmesser (D2) aufweist, in einen zweiten, zum ersten Wandabschnitt (37) und dem Befestigungsabschnitt (36) axial beabstandeten zweiten Wandabschnitt (39) übergehen, der auf die Längsachse (13) zu verläuft und in einer axial vorstehenden Dichtlippe (40), die auf einem dritten Durchmesser (D3) angeordnet ist, endet, welche zur Anlage an der Gegenfläche (27, 28) bestimmt ist, wobei die Beziehung gilt, daß eine Ringfläche zwischen dem ersten Durchmesser (D1) und dem zweiten Durchmesser (D2) größer ist, als die Ringfläche zwischen dem zweiten Durchmesser (D2) und dem dritten Durchmesser (D3), und wobei ferner die Dichtung (26) axial federnd ausgebildet ist.

2. Vorrichtung nach Anspruch 1,
**dadurch gekennzeichnet,**
**daß** die Dichtungen (26) mit dem Innenteil (21) verbunden sind und die zugehörigen Gegenflächen (27, 28) dem Gehäuse (14) zugeordnet sind oder zu einem Bauteil (17) gehören, das mit dem Gehäuse (14) dicht verbunden ist.

3. Vorrichtung nach Anspruch 1,
**dadurch gekennzeichnet,**
**daß** die Dichtung (26) mit ihrer Dichtlippe (40) im unbeaufschlagten Zustand die Gegenfläche (27, 28) vorspannungsfrei berührt oder zu dieser mit einem geringen Spalt angeordnet ist.

4. Vorrichtung nach einem der Ansprüche 1 bis 3,
**dadurch gekennzeichnet,**
**daß** die Ringkammer (25) über ein Ventil (9, 30) mit der freien Atmosphäre verbindbar ist.
